# EUROPÄISCHE PATENTSCHRIFT

(11) **EP 2 032 622 B1**
(45) Veröffentlichungstag und Bekanntmachung des Hinweises auf die Patenterteilung: **26.05.2010**
(21) Anmeldenummer: 07785852.0
(22) Anmeldetag: 27.06.2007
(51) Int. Cl.: C08G 61/00

(54) **SCHNELLHÄRTENDES CHEMISCHES BEFESTIGUNGSSYSTEM UND DESSEN VERWENDUNG**
FAST-CURING CHEMICAL FASTENING SYSTEM AND USE THEREOF
SYSTÈME DE SCELLEMENT CHIMIQUE À DURCISSEMENT RAPIDE ET SON UTILISATION

(30) Priorität: 29.06.2006 DE 102006030044
(43) Veröffentlichungstag der Anmeldung: 11.03.2009
(73) Patentinhaber: fischerwerke GmbH & Co. KG, 72178 Waldachtal (DE)
(72) Erfinder: GRÜN, Jürgen, 79268 Bötzingen (DE); STEURER, Paul, 79331 Teningen (DE); VOGEL, Martin, 79286 Glottertal (DE); KOLESKO, Regina, 79312 Emmendingen (DE)
(86) Internationale Anmeldenummer: PCT/EP2007/005671
(87) Internationale Veröffentlichungsnummer: WO 2008/000452

(56) Entgegenhaltungen:
- EP-A- 1 586 596

## Beschreibung

Die Erfindung betrifft ein schnell belastbares chemisches Befestigungssystem, dessen Verwendung und weitere unten genannte erfindungsgemäße Erfindungsgegenstände.

Im Bau- und allgemeiner Befestigungsbereich sind eine Reihe von chemischen Befestigungssystemen, insbesondere zum Befestigen von Verankerungselementen, wie Schrauben oder Bolzen, in Löchern in Substraten, wie Mauerwerk, auf der Basis von Harzen mit radikalisch härtenden olefinischen Verbindungen bekannt. So gibt es beispielsweise entsprechende Zwei-Komponenten-Harze oder entsprechende Kits, beispielsweise in Form von Mehrkammerpatronen oder -kartuschen, welche Komponenten (wie Monomere bzw. Härter) separat enthalten, die erst im Moment der oder kurz vor der Einbringung von Verankerungselementen in Löcher (beispielsweise durch Zerbrechen der Ampullen oder durch Statikmischer) gemischt werden und in die dann Verankerungselemente eingebracht und somit befestigt werden können.

Bekannte chemische Befestigungssysteme auf dieser Basis haben den Nachteil, dass sie eine temperaturabhängige und meist recht lange Aushärtungszeit benötigen und somit nicht sofort belastbar sind. In der Regel liegt bei Raumtemperatur die Aushärtungszeit bei 30 bis 45 min oder mehr, was bedeutet, dass es nicht möglich ist, im engen zeitlichen Zusammenhang mit der Einbringung des entsprechenden Harzes bzw. Kunstmörtels auch die Verankerungselemente einzubringen und zu belasten.

Ein rasches Befestigen ist umgekehrt bei der Verwendung von Spreiz- oder Hinterschnittdübeln möglich, doch sind hier stets das Vorhandensein passender Dübel und Bolzengrößen sowie entsprechend gleichmäßige Löcher oder aufwändige Dübelkonstruktionen zum Ausgleich ungleichmäßiger Löcher erforderlich. Außerdem ist hier eine spreizdruckfreie Befestigung nicht möglich.

Aufgabe der Erfindung ist daher, ein chemisches Befestigungssystem zu finden, welches es ermöglicht, ohne die genannten und weitere Nachteile der bisherigen Systeme eine kurze Aushärtezeit zu ermöglichen und eine nahezu sofort belastbare chemische Befestigung zu erreichen.

Erfindungsgemäß wird dies erreicht durch ein sehr stark beschleunigtes System mit reaktiven Olefinen, insbesondere (Meth)acrylsäureestern, und den Einsatz von Inhibitoren mit äußerst geringer Beeinflussung der Gelier- und Aushärtezeit in Kombination mit besonders aktivem aminischem Beschleuniger und mit einer Mindestmenge an Peroxid.

Mittels der erfindungsgemäßen Systeme lassen sich Aushärtezeiten von weniger als 5 Minuten bei Temperaturen oberhalb von -5 (= minus fünf) °C erzielen, bei einer Offenzeit von 5 bis 180 sec, z.B. 30 - 120 sec, bei 23 °C und einer Lagerstabilität von beispielsweise mehr als 3 Monaten, vorzugsweise 6 Monaten oder mehr. Die Offenzeit (bzw. Gelierzeit) wird wie folgt bestimmt: Mörtel und Härter werden auf die Prüftemperatur (beispielsweise 21 °C) konditioniert, im gewünschten Mischungsverhältnis gemischt und die Zeit vom Beginn der Durchmischung bis zum deutlichen Viskositätsanstieg gemessen. Die Gelierzeit bzw. Offenzeit ist also die Zeit, in der die Masse eine zur Verarbeitung hinreichend niedrige Viskosität aufweist (Zeit nach dem Mischen, ab der das erfindungsgemäße chemische Befestigungssystem nicht mehr frei fließt und/oder teilweise ausgehärtete Teilbereiche aufweist).

Eine Ausführungsform der Erfindung betrifft daher ein chemisches Befestigungssystem, welches eine radikalisch härtende (was auch "härtbare" einschließt) olefinische Reaktionsharzformulierung (nachfolgend als "Reaktionsharzformulierung" bezeichnet), einen Härter und keine oder weitere Zusätze umfasst, wobei die Reaktionsharzformulierung aus einem oder mehreren radikalisch härtenden olefinischen Reaktionsharzen, einem oder mehreren aminischen Beschleunigern, einem oder mehreren nichtphenolischen (anaeroben) Inhibitoren und keinem oder vorzugsweise einem oder mehreren phenolischen Inhibitoren zusammengesetzt ist, und als Härter ein solcher mit mindestens einem Peroxid als Initiator vorgesehen ist, **dadurch gekennzeichnet, dass** die Reaktionsharzformulierung (als aminischen Beschleuniger) mindestens einen hochaktiven aminischen Beschleuniger in einer Menge von mindestens 1,5, vorzugsweise mindestens 2 Gew.-%, bezogen auf die Masse der Reaktionsharzformulierung, aufweist, das Massenverhältnis von Beschleuniger zu phenolischem Inhibitor darin bei > 5, vorzugsweise bei 10 oder größer liegt (was auch beinhaltet, dass bei Abwesenheit von phenolischem Inhibitor dieses Verhältnis bei "unendlich" liegt), und die Reaktionsharzformulierung (als nicht-phenolische(n) Inhibitor(en)) bis zu 5 Gew.-%, vorzugsweise 0,0001 bis 5 Gew.-%, bezogen auf die Masse der Reaktionsharzformulierung, mindestens eines nicht-phenolischen (anaeroben) Inhibitors, der die Aushärtezeit kaum beeinflusst, aufweist, und im Härter mindestens 1 % Peroxid, vorzugsweise 1,5 bis 10 %, bezogen auf die Masse der Reaktionsharzformulierung, vorgesehen sind (d.h., zu den zusammen 100 % der Komponenten der Reaktionsharzformulierung kommen noch die mindestens 1 % Peroxid hinzu).

Die vor- und nachstehend verwendeten Ausdrücke haben im Rahmen der vorliegenden Offenbarung, sofern nichts anderes angegeben ist, vorzugsweise die jeweils nachfolgend genannten Bedeutungen, wobei allgemeinere Ausdrücke unabhängig voneinander, d.h. alleine, zu mehreren oder in allen Fällen, durch spezifischere Definitionen ersetzt werden können, was zu möglichen bevorzugten Ausführungsformen der Erfindung führt:

"Umfassend", "umfassen", "beinhaltend" oder "beinhalten" bedeutet jeweils, dass neben den genannten Bestandteilen noch weitere enthalten sein können, während "bestehen aus", "zusammengesetzt aus" und "enthalten(d)" bedeutet, dass die damit im Zusammenhang genannten Bestandteile abschließend aufgezählt werden. Wenn ein Bestandteil "vorgesehen" ist, bedeutet dies, dass das entsprechende System diesen Bestandteil aufweist (beinhaltet).

Unter einem erfindungsgemäßen chemischen Befestigungssystem ist in erster Linie die Kombination eines ein-, vorzugsweise mehrkomponentigen Harzes (Kunstmörtel, härtende Masse) auf Basis einer radikalisch härtenden olefinischen Reaktionsharzformulierung bzw. von Komponenten hierfür und eines Härters (Härterkomponente) zu verstehen, wobei auch weitere Zusätze, wie insbesondere Füllstoffe, Bestandteil des vollständigen chemischen Befestigungssystem sein können.

Unter radikalisch härtenden olefinischen Reaktionsharzen sind in erster Linie solche zu verstehen, die als radikalisch aushärtende (was "(z.B. vor Härterzugabe) aushärtbar" einschließt) Komponenten organische Verbindungen mit ungesättigten (olefinischen) Resten beinhalten oder insbesondere daraus bestehen, insbesondere solche, die härtbare Ester mit ungesättigten Carbonsäureresten, wie vorzugsweise Vinylesterharze, umfassen; z.B. insbesondere Acrylat-oder Acrylamid-Monomere, wie Acrylsäure und/oder Methacrylsäure (wobei diese Säuren oder ihr Gemisch nachfolgend als (Meth)acrylsäure bezeichnet werden, die entsprechenden Ester als (Meth)acrylate) oder vorzugsweise deren Ester oder Amide, insbesondere Mono-, Di- oder Triacrylate oder -methacrylate (einschließlich Hydroxypropyl(meth)acrylat, Hydroxyethyl(meth)acrylat, Ethylenglykoldi(meth)acrylat, Butandioldi(meth)acrylat oder (vorzugsweise jeweils ethoxyliertem) Bisphenol-A, Bisphenol-F- oder Novolak-di-(meth)acrylat), Epoxyacrylate (in Form insbesondere von Umsetzungsprodukten von Di- oder Polyepoxiden, z.B. Bisphenol-A-, Bisphenol-F-oder Novolak-di- und/oder -poly-glycidylethern, mit olefinischen Carbonsäuren, z.B. C₂-C₇-Alkencarbonsäuren, wie insbesondere (Meth)acrylsäure), Urethan- und/oder Harnstoffacrylate, und/oder ungesättigte Polyesterharze mit ungesättigter Carbonsäurekomponente, oder dergleichen; insbesondere Mono-, Di- oder Triacrylate oder -methacrylate (vor allem Di(meth)acrylate von ethoxyliertem Bisphenol-A, Bisphenol-F oder Novolak) und/oder Epoxyacrylate; oder ein Gemisch von zwei oder mehr dieser härtbaren olefinischen organischen Komponenten (organischen Verbindungen); wobei alternativ oder vorzugsweise zusätzlich auch andere härtbare olefinische Verbindungen, beispielsweise Styrole, wie Styrol, α-Methylstyrol, Vinyltoluol und/oder Divinylbenzol, als radikalisch härtendes olefinischen Reaktionsharz oder als einer seiner Bestandteile vorgesehen sein können. Besonders bevorzugt sind Epoxyacrylate und/oder Mono-, Di- oder Triacrylate oder -methacrylate, insbesondere wie oben genauer definiert, oder Gemische von zwei oder mehr dieser Komponenten.

Das radikalisch härtbare olefinische Reaktionsharz (bzw. die Gesamtmenge seiner Komponenten) liegt, bezogen auf die Masse der Reaktionsharzformulierung beispielsweise in einem Gewichts anteil von 5 bis 98,5 %, wie etwa von 10 bis 98,5, z.B. 10 bis 89,5 %, vor.

Als aminische Beschleuniger kommen solche mit hinreichend hoher Aktivität in Frage. Beispiele für bevorzugte aminische Beschleuniger sind insbesondere solche, welche eine Aktivität haben, die größer ist als die von Dimethylanilin oder Diethylanilin, wie insbesondere (vorzugsweise tertiäre, insbesondere hydroxyalkylaminogruppensubstituierte) aromatische Amine ausgewählt aus der Gruppe, die aus N,N-bis(hydroxyC₁-C₇-alkyl)-anilinen, -toluidinen oder - xylidinen, insbesondere N,N-bis(hydroxymethyl- oder hydroxyethyl)-toluidine oder -xylidine, wie N,N-bis(hydroxymethyl- oder hydroxyethyl)-p-toluidin, N,N-Bis-(hydroxyethyl)-xylidin und ganz besonders entsprechenden technischen Produkten, die im wesentlichen N-unsubstituierte, N-mono-, N,N-bis-, N,N,N-tris- und/oder N,N,N,N-tetrakis(hydroxy-C₁-C₇-alkyl, insbesondere hydroxyethyl)-substituierte Aniline, p-Toluidine oder Xylidine, beispielsweise in statistischer Verteilung, enthalten, wie technisches "ethoxyliertes p-Toluidin", besteht. Ein oder mehrere derartige Beschleuniger sind möglich. Die Beschleuniger haben, bezogen auf die Masse der Reaktionsharzformulierung, vorzugsweise einen Anteil (Konzentration) von 1,5 bis 10, insbesondere von 2 bis 5 Gew.-%.

Als phenolisches Inhibitoren (die oft als bereits zugemischter Bestandteil von käuflichen radikalisch härtenden Reaktionsharzen vorgesehen sind, aber ferner auch fehlen können) kommen Hydrochinone, wie Hydrochinon, Mono-, Di- oder Trimethylhydrochinon, Phenole, wie 4,4'-bis(2,6-di-tert-butylphenol), 1,3,5-trimethyl-2,4,6-tris(3,5-di-tert-butyl-4-hydroxybenzyl)-benzol, Butylbrenzcatechine, wie 3,5-di-tert-butyl-1,2-benzoldiol, oder insbesondere 4-Methoxyphenol, oder Gemische von zwei oder mehr davon, in Frage. Diese haben, bezogen auf die Reaktionsharzformulierung, vorzugsweise einen Anteil von bis zu 1 Gew.-%, insbesondere zwischen 0,0001 und 0,5 Gew.-%, z.B. zwischen 0,01 und 0,1 Gew.-%. Dabei ist die Menge so eingestellt, dass das Gewichtsverhältnis von Beschleuniger zu phenolischem Inhibitor bei > 5, vorzugsweise bei 10, stärker bevorzugt bei 15 oder mehr, insbesondere bei 20 oder mehr (beispielsweise bei 15 bis 70 oder im Falle des Fehlens bei "unendlich") liegt. Vorzugsweise sind allerdings phenolische Inhibitoren vorgesehen, d.h. sie fehlen nicht in der Reaktionsharzformulierung.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beeinflussen) kommen vorzugsweise Phenothiazine, wie Phenothiazin, oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-oxyl-2,2,6,6-tetramethylpiperidin-4-ol ("4-OH-TEMPO"). Der Gewichtsanteil der nicht-phenolischen Inhibitoren liegt vorzugsweise, bezogen auf die Reaktionsharzformulierung, im Bereich von 1 ppm bis 2 %, vorzugsweise im Bereich von 10 ppm bis 1 %. Diese Komponente ist besonders deshalb sinnvoll und meist erforderlich, da sonst die anzustrebende Lagerstabilität (vorzugsweise mehr als 3 Monate, insbesondere 6 Monate oder mehr, beispielsweise mehr als zwei Jahre) nicht erreicht werden kann. Die UV- und insbesondere die Lagerstabilität können so beträchtlich erhöht werden.

Die Kombination der phenolischen und der nichtphenolischen Inhibitoren ermöglicht dabei einen synergistischen Effekt, wie auch die Einstellung einer im wesentlichen driftfreien Einstellung der Gelierzeit der Reaktionsharzformulierung zeigt. Auch eine Reaktionsharzformulierung als solche, wie sie für die oben oder unten oder in den Ansprüchen genannten chemischen Befestigungssysteme genannt werden, ist Gegenstand der vorliegenden Erfindung.

Der Härter beinhaltet mindestens ein Peroxid als eigentlichen Initiator. Der Begriff "Härter" bedeutet dabei vorzugsweise vor- und nachstehend reine Initiatoren oder phlegmatisierte Initiatoren mit oder ohne Füllstoffzusatz und/oder Lösungsmittelzusatz, mit anderen Worten, die komplette Härterkomponente. Der Härter kann als separate Komponente und/oder (insbesondere in geschützter Form, d.h. z.B. in mikroverkapselter Form) auch in der Reaktionsharzformulierung (als einer härtbaren Komponente, d.h. einer solchen, die nach Mischung mit dem Härter durch radikalische Polymerisierung aushärtet), eingearbeitet sein. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/oder (insbesondere zur Herstellung einer Paste oder Emulsion) Lösungsmitteln, insbesondere Wasser, zugesetzt sein.

Bezogen auf die Härterkomponente liegt der Anteil des Initiators in einer möglichen bevorzugten Ausführungsform der Erfindung bei 1 bis 90 Gew.-%, insbesondere bei 10 bis 60 Gew.-%.

Als Initiator für die Härtung der erfindungsgemäßen Reaktionsharzformulierungen finden im Falle der radikalischen Polymerisation radikalbildende Peroxide, wie organische Peroxide, wie Diacylperoxide, z.B. Diacetylperoxid, Dibenzoyl-oder Bis(4-chlorobenzoyl)peroxid, Ketonperoxide, wie Methylethylketonperoxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen chemischen Befestigungssystem liegt dabei vorzugsweise, bezogen auf die Masse der zugehörigen Reaktionsharzformulierung, in einem Bereich von 1,2 bis 50 Gew.-%, wobei der Anteil an Peroxid, ebenfalls bezogen auf die Masse der zugehörigen Reaktionsharzformulierung (100 %), bei (zusätzlichen) 1 oder mehr Gew.-%, vorzugsweise bei 1,5 bis 10 Gew.-%, liegt.

Weitere Zusätze, die in einem erfindungsgemäßen chemischen Befestigungssystem vorhanden sein können, sind insbesondere Füllstoffe, oder weitere Zusätze, wie Weichmacher, nicht reaktive Verdünnungsmittel, Flexibilisatoren, Stabilisatoren, Härtungskatalysatoren, Rheologiehilfsmittel, Thixotropiermittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Derartige weitere Zusätze können vorzugsweise insgesamt, bezogen auf die gesamte Masse des chemischen Befestigungssytems, in Gewichtsanteilen von insgesamt 0 bis 90 %, beispielsweise außer im Falle von Füllstoffen von 0 bis 40 Gew.-%, zugesetzt sein.

Als Füllstoffe finden übliche Füllstoffe, insbesondere Zemente, Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon. Die Füllstoffe können in einer oder, im Falle von Mehrkomponentenkits, in mehreren Komponenten eines erfindungsgemäßen Mehrkomponentenkits, beispielsweise einer oder beiden Komponenten eines entsprechenden Zweikomponentenkits, vorhanden sein; der Anteil an Füllstoffen, bezogen auf das Gesamtgewicht des erfindungsgemäßen chemischen Befestigungssystems, beträgt vorzugsweise 0 bis 90 Gew.-%, beispielsweise 10 bis 90 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann, vorzugsweise wird).

Die erfindungsgemäßen Befestigungssysteme können als Ein- (wenn z.B. der Härter geschützt, beispielsweise eingekapselt ist) oder vorzugsweise Mehr-Komponentensysteme (Mehrkomponentenkit) vorgesehen sein und auch verwendet werden.

Unter einem Mehrkomponentenkit ist insbesondere ein Zwei- oder Mehrkomponentenkit (vorzugsweise ein Zweikomponentenkit mit den Komponenten Reaktionsharzformulierung (Komponente a), die zusätzlich noch weitere Zusätze enthalten kann, wie unten beschrieben, insbesondere Füllstoffe) und Härter (Komponente b)), wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten a) und b) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten a) und b) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Sehr geeignet sind Patronen (die besonders bevorzugt sind), beispielsweise aus Kunststoff, Keramik oder insbesondere Glas, in denen die Komponenten durch (beispielsweise bei Eintreiben eines Verankerungselements in eine Aussparung, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; Flaschen; Kunststoff-, wie Folienbeutel mit zwei oder mehr Kammern, oder Behältnisse wie Eimer oder Wannen mit mehreren Kammern oder Sets (z.B. Gebinde) von zwei oder mehr derartigen Behältnissen, wobei zwei oder mehr Komponenten der jeweiligen härtbaren Masse, insbesondere zwei Komponenten a) und b) wie oben definiert, jeweils räumlich voneinander getrennt als Kit oder Set vorliegen, bei denen der Inhalt nach Vermischen oder unter Vermischen auf die Anwendungsstelle (insbesondere mittels Geräten zum Auftragen wie Spachteln, Pinseln, Tuben, Spritzen oder eines Statikmischers), in eine Aussparung (Loch), wie ein Bohrloch, zum Befestigen von Verankerungselementen wie Ankerstangen, Bolzen, Schrauben oder dergleichen, verbracht wird; sowie Mehr- oder insbesondere Zweikomponentenkartuschen (die ebenfalls besonders bevorzugt sind), in deren Kammern die mehreren oder vorzugsweise zwei Komponenten (insbesondere a) und b)) des erfindungsgemäßen Befestigungssystem mit oben und nachstehend genannten Zusammensetzungen zur Aufbewahrung vor der Nutzung enthalten sind, wobei vorzugsweise auch ein Statikmischer zum entsprechenden Kit gehört. In den Fällen der Folienbeutel und der Mehrkomponentenkartuschen kann auch eine Vorrichtung zum Entleeren zum Mehrkomponentenkit gehören, doch kann diese vorzugsweise auch (beispielsweise zur mehrfachen Verwendung oder zugunsten separater Austauschbarkeit) unabhängig vom Kit sein.

Die Verwendung eines erfindungsgemäßen chemischen Befestigungssystems (insbesondere als spezielle Ausführungsform der Erfindung auch die Verwendung einer Reaktionsharzformulierung wie oben und nachstehend beschrieben zusammen mit einer wie oben oder nachstehenden Menge an Härter) am gewünschten Einsatzort erfolgt durch Mischen von zugehörigen Komponenten, insbesondere der Reaktionsharzformulierung (wobei die Reaktionsharzformulierung beinhaltende Komponente auch bereits weitere Zusätze, wie insbesondere Füllstoffe, umfassen kann) mit einem Härter, wie oben definiert, am gewünschten Einsatzort, insbesondere nahe bei oder direkt vor einem Loch oder (beispielsweise insbesondere bei Verwendung von Statikmischern oder beim Zerschlagen entsprechender Patronen) innerhalb eines Loches, z.B. einem Bohrloch. Das Mischen kann außerhalb des Loches, beispielsweise in einem Gefäß, z.B. einer Schüssel, oder vorzugsweise einem Statikmischer an einer Mehrkammer-, insbesondere Zwei- oder ferner Dreikammer-Kartusche, oder innerhalb desselben erfolgen, z.B. bei Verwendung von Mehrkammerpatronen, insbesondere Drei-oder vorzugsweise Zweikammerpatronen. Man erhält einen Kunstmörtel mit den vorliegend beschriebenen vorteilhaften Eigenschaften.

Unter Befestigung ist insbesondere eine Befestigung mit Hilfe von Verankerungsmitteln aus Metall (z.B. Hinterschneidanker, Gewindestangen, Schrauben, Bohranker, Bolzen) oder ferner einem anderen Material, wie Kunststoff oder Holz, in festen Aufnahmewerkstoffen, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassaden oder andere Bauelemente befestigt werden.

Die Einbringung und Mischung (Verwendung) erfolgt im Falle von besonders bevorzugt verwendeten Patronen als Mehrkammersystem vorzugsweise gemeinsam mit dem Verankerungsmittel, insbesondere einem der im letzten Absatz beschriebenen, im Falle der Verwendung von separaten Behältnissen oder vor allem von Ausdrückpistolen mit Kartuschen, bei denen die Komponenten in einem Statikmischer vermischt werden, insbesondere direkt vor dem Einbringen des Verankerungsmittels. Die Einbringung des oder der Verankerungsmittel(s) erfolgt vorzugsweise bereits sehr kurze Zeit, vorzugsweise 5 Minuten oder weniger, nach dem Mischen der Komponenten des chemischen Befestigungssystems. Zur Erläuterung: Mit der Mischung und Einbringung der Komponenten auf oder in die gewünschten Stellen, an denen Verankerungsmittel befestigt werden sollen, insbesondere Löcher, wie Bohrlöcher, beginnen mehrere, im wesentlichen parallel und/oder nur mit geringer zeitlicher Versetzung ablaufende Reaktionen, insbesondere die Kettenpolymerisation. Die endgültige Aushärtung erfolgt in situ.

Von den Reaktionssystemen kann die Gelierzeit bei Raumtemperatur durch Härtung nach Initiierung mit dem jeweils vorgesehenen Härter bestimmt werden, wie oben oder oben und in den Beispielen dargelegt.

Dass eine Belastung des Verankerungselements nach 5 oder weniger Minuten, z.B. insbesondere nach 1 bis 3, Minuten (insbesondere bei Raumtemperatur) erfolgt, bedeutet z.B., dass dann am Verankerungselement zu befestigende Teile, beispielsweise Platten, Geländer oder Ähnliches, befestigt werden und die Verankerungselemente belastet werden, ohne dass Lageänderung eintritt.

Die Erfindung betrifft insbesondere die in den Ansprüchen und vorzugsweise den Unteransprüchen genannten Ausführungsformen der Erfindung, weshalb diese hier durch Bezugnahme aufgenommen werden. Sehr bevorzugte Ausführungsformen sind in den Beispielen dargelegt.

Die Bruchlast und/oder die Verbundspannung, die Gelierungszeit ((wie oben definiert) und die Zeit bis zu hinreichender Aushärtung zur Verankerung von Befestigungselementen können allgemein wie in den Beispielen beschrieben ermittelt werden. Man kann entweder die Versagenslast = Bruchlast mit den Randbedingungen des Versuchs (Bohrlochtiefe, Ankerstangendurchmesser, insbesondere jeweils wie in den Beispielen genannt) angeben, oder aber die Verbundspannung, die sich aus dem Quotienten von Bruchlast und Mantelfläche des eingebundenen Teils der Ankerstange errechnet. Unter Aushärtezeit ist die Zeit zu verstehen, nach der die Bruchlast 80 % der maximal erreichbaren Last erreicht.

Die nachfolgenden Beispiele dienen der Illustration der Erfindung, ohne ihren Umfang einzuschränken, wobei %-Angaben sich immer auf Gew.-% beziehen:

### Beispiel 1: Schnellhärtendes Zwei-Komponenten-System und dessen Verwendung

### a) Herstellung einer Reaktionsharzformulierung für radikalische Härtung:

Eine Mischung aus 87 % ethoxyliertem Bisphenol-A-dimethacrylat, 10 % Hydroxypropylmethacrylat (Bisomer 2. HPMA der Firma Cognis Deutschland GmbH & Co KG, Düsseldorf, DE) mit 2,8 % ethoxyliertem Toluidin und 0,05 % 4-Methoxyphenol sowie 0,15 % Phenothiazin wird hergestellt, wobei sich die %-Angaben auf das Gesamtgewicht der Reaktionsharzformulierung (Komponente a)) bezieht.

### b) Herstellung einer Patrone:

4 g der Komponente a), 8 g Quarzsand und ein Härterstäbchen mit 0,3 g Dibenzoylperoxid (50%-ig) werden in eine Patrone M12 gefüllt. Die Patrone wird verschlossen.

**c)** Zum Befestigen eines Verankerungsbolzens wird die Patrone aus 1 b) in ein Loch in einer Mauer eingeführt und der Verankerungsbolzen in das Loch drehend und/oder schlagend einvibriert, wodurch die Patrone zerbricht und Härter und Monomere miteinander in Kontakt kommen. Die Gelierzeit liegt bei 40 sec. bei 21 °C.

Die Lagerstabilität der Patrone mit Füllung liegt bei mehr als 2 Jahren. Die Verbundspannung wird ermittelt durch Auszugsversuche von Ankerstangen M12 aus Beton (C20/C25) mit einer Setztiefe von 95 mm. Bei einem Bohrlochdurchmesser von 14 mm beträgt die benötigte Setzzeit (Zeit, um die Ankerstange auf praktisch der gesamten Setztiefe einzuvibrieren) 6,5 sec, die Aushärtezeit liegt bei lediglich 2 min. Eine Bruchlast von 63 kN wird gemessen.

## Patentansprüche

1. Schnell belastbares chemisches Befestigungssystem für Verankerungselemente, welches eine radikalisch härtende, was auch "härtbare" einschließt, olefinische Reaktionsharzformulierung, einen Härter und keine oder weitere Zusätze umfasst, wobei die Reaktionsharzformulierung aus einem oder mehreren härtenden olefinischen Reaktionsharzen, einem oder mehreren aminischen Beschleunigern, einem oder mehreren nichtphenolischen (anaeroben) Inhibitoren und keinem oder einem oder mehreren phenolischen Inhibitoren zusammengesetzt ist, und als Härter ein solcher mit mindestens einem Peroxid als Initiator vorgesehen ist, **dadurch gekennzeichnet, dass** die Reaktionsharzformulierung als aminische(n) Beschleuniger mindestens einen hochaktiven aminischen Beschleuniger in einer Menge von mindestens 1,5 Gew.-%, bezogen auf die Masse der Reaktionsharzformulierung, aufweist, das Massenverhältnis von Beschleuniger zu phenolischem Inhibitor darin bei > 5 liegt, was beinhaltet, dass bei Abwesenheit von phenolischem Inhibitor dieses Verhältnis bei "unendlich" liegt, und die Reaktionsharzformulierung als nicht-phenolische(n) Inhibitor(en) bis zu 5 Gew.-%, bezogen auf die Masse der Reaktionsharzformulierung, mindestens eines nicht-phenolischen Inhibitors, der die Aushärtezeit kaum beeinflusst, aufweist, und im Härter mindestens 1 % Peroxid, bezogen auf die Masse der Reaktionsharzformulierung, vorgesehen ist.

2. Chemisches Befestigungssystem nach Anspruch 1, **dadurch gekennzeichnet, dass** in der Reaktionsharzformulierung mindestens ein phenolischer Inhibitor vorgesehen ist und das Massenverhältnis von Beschleuniger zu phenolischem Inhibitor darin bei > 5 liegt.

3. Chemisches Befestigungssystem nach einem der Ansprüche 1 oder 2, **dadurch gekennzeichnet, dass** die Reaktionsharzformulierung mindestens eine aushärtende Komponente für radikalisch härtende Reaktionsharze ausgewählt aus der Gruppe, die aus Vinylesterharzen; Acrylat-Monomeren, Acrylamid-Monomeren, Mono-, Di- oder Triacrylaten oder -methacrylaten, Epoxyacrylaten, Urethan- oder Harnstoffacrylaten, ungesättigten Polyestern mit ungesättigter Carbonsäurekomponente und Styrolen, oder Gemischen von zwei oder mehr solchen Verbindungen, besteht, umfasst.

4. Chemisches Befestigungssystem nach einem der Ansprüche 1 bis 3, **dadurch gekennzeichnet, dass** die Reaktionsharzformulierung 2 Gew.-%, bezogen auf die Masse der Reaktionsharzformulierung, oder mehr des aminischen Beschleunigers beinhaltet, vorzugsweise 2 bis 5 Gew.-%, mindestens einen phenolischen Inhibitor aufweist, das Gewichtsverhältnis von aminischem Beschleuniger zu phenolischem Inhibitor bei 10 oder mehr, vorzugsweise bei 15 bis 70, insbesondere bei 20 bis 70 liegt und im Härter mindestens 1,5 Gew.-%, bezogen auf die Masse der Reaktionsharzformulierung, vorzugsweise mindestens 2 Gew.-%, insbesondere 2 bis 10 Gew.-% Peroxid vorgesehen sind.

5. Chemisches Befestigungssystem nach einem der Ansprüche 1 bis 4, **dadurch gekennzeichnet, dass,** bezogen auf die Masse der Reaktionsharzformulierung, radikalisch härtende olefinische Reaktionsharz bzw. die dieses darstellenden Monomeren oder Monomerengemische in einem Gewichtsanteil von 5 bis 98,5 %, insbesondere von 10 bis 98,5 Gew.-%, vorgesehen sind.

6. Chemisches Befestigungssystem nach einem der Ansprüche 1 bis 5, worin in der Reaktionsharzformulierung als aminischer Beschleuniger ein aromatisches Amin vorgesehen ist ausgewählt aus der Gruppe, die aus N,N-bis(hydroxyC₁-C-₇-alkyl)-anilinen, - toluidinen oder - xylidinen, insbesondere N,N-bis(hydroxymethyl- oder hydroxyethyl)-toluidin oder -xylidin, vorzugsweise N,N-bis(hydroxymethyl- oder hydroxyethyl)-p-toluidin, N,N-Bis(hydroxyethyl)-xylidin, und technischen Produkten, die im wesentlichen jeweils N-unsubstituierten, N-mono-, N,N-bis-, N,N,N-tris- und/oder N,N,N,N-tetrakis(hydroxy-C₁-C₇-alkyl, insbesondere hydroxyethyl)-substituierten Anilinen, p-Toluidinen oder Xylidinen, wie technischem ethoxyliertem p-Toluidin, besteht, oder Gemische von zwei oder mehr dieser aminischen Inhibitoren.

7. Chemisches Befestigungssystem nach einem der Ansprüche 1 bis 6, worin in der Reaktionsharzformulierung als phenolischer Inhibitor Hydrochinonderivate, Hydrochinon, Mono-, Di- oder Trimethylhydrochinon, Phenole, insbesondere 4,4'-bis(2,6-di-tert-butylphenol), 1,3,5-trimethyl-2,4,6-tris(3,5-di-tert-butyl-4-hydroxybenzyl)-benzol, Butylbrenzcatechine, vor allem 3,5-di-tert-butyl-1,2-benzoldiol, oder 4-Methoxyphenol, oder ein Gemische von zwei oder mehr davon, vorgesehen ist, wobei, bezogen auf die Masse der Reaktionsharzformulierung, die Menge so eingestellt ist, dass der Anteil darin bei nicht mehr als 1 %, insbesondere zwischen 0,0001 und 1 Gew.-%, liegt mit der Maßgabe, dass das Gewichtsverhältnis von aminischem Beschleuniger zu phenolischem Inhibitor bei > 5, vorzugsweise bei 10 oder mehr, insbesondere bei 15 oder mehr, beispielsweise jeweils bis 70, liegt.

8. Chemisches Befestigungssystem nach einem der Ansprüche 1 bis 7, **dadurch gekennzeichnet, dass** in der Reaktionsharzformulierung als nicht-phenolischer Inhibitor ein Phenothiazin, insbesondere Phenothiazin selbst, oder ein organisches Nitroxylradikal, insbesondere 1-oxyl-2,2,6,6-tetramethylpiperidin-4-ol, oder ein Gemisch davon in einem Gewichtsanteil, bezogen auf die Masse der Reaktionsharzformulierung, im Bereich von 1 ppm bis 2 %, vorzugsweise von 10 ppm bis 1 % vorgesehen ist.

9. Chemisches Befestigungssystem nach einem der Ansprüche 1 bis 8, **dadurch gekennzeichnet, dass** als Härter ein solcher mit mindestens einem Peroxid ausgewählt aus organischen Peroxiden, insbesondere Diacylperoxiden, vorzugsweise Diacetylperoxid, Dibenzoyl- oder Bis(4-chlorobenzoyl)peroxid, Ketonperoxiden, vorzugsweise Methylethylketonperoxid oder Cyclohexanonperoxid, oder Alkylperestern, vorzugsweise tert-Butylperbenzoat, und ferner anorganischen Peroxiden, wie Persulfaten oder Perboraten, als Initiator vorgesehen ist, wobei im Härter mindestens 2 % Peroxid, vorzugsweise 2 bis 15 %, insbesondere 2 bis 10 %, jeweils bezogen auf die Masse der Reaktionsharzformulierung, vorgesehen sind.

10. Chemisches Befestigungssystem nach einem der Ansprüche 1 bis 9, **dadurch gekennzeichnet, dass** es neben der Reaktionsharzformulierung und/oder dem Härter einen oder mehrere Zusätze, insbesondere Füllstoffe und/oder weitere Zusätze, wie Weichmacher, nicht reaktive Verdünnungsmittel, Flexibilisatoren, Stabilisatoren, Härtungskatalysatoren, Rheologiehilfsmittel, Thixotropiermittel, Netzmittel, oder färbende Zusätze, wie Farbstoffe oder insbesondere Pigmente, enthält.

11. Chemisches Befestigungssystem nach einem der Ansprüche 1 bis 11 in Form eines Mehrkomponenten-, inbesondere ZweiKomponentenkits.

12. Chemisches Befestigungssystem nach Anspruch 11 in Form eines Mehrkomponentenkits, **dadurch gekennzeichnet, dass** es sich bei dem Mehrkomponentenkit um eine Patrone handelt, welche die Reaktionsharzformulierung, gegebenenfalls mit einem oder mehreren Füllstoffen, und den Härter in räumlich voneinander getrennter Form enthält.

13. Verwendung eines chemischen Befestigungssystems nach einem der Ansprüche 1 bis 12 zur Befestigung von einem oder mehreren Verankerungselementen, wobei eine Reaktionsharzformulierung und ein Härter, wie in den genannten Ansprüchen genannt, miteinander vermischt und anschließend oder gleichzeitig in mindestens ein Loch eingebracht werden und gleichzeitig oder anschließend mindestens ein Verankerungselement in das mindestens eine Loch eingebracht werden.

14. Verwendung nach Anspruch 13, **dadurch gekennzeichnet, dass** die Belastung des Verankerungselements nach 5 oder weniger Minuten, insbesondere nach 1 bis 3 Minuten, erfolgt.

15. Verwendung nach einem der Ansprüche 13 oder 14, wobei sich das Loch in einem Substrat befindet, welches Bestandteil eines Bauwerkes ist oder wird, vor allem von Mauerwerk, Decken, Wänden, Böden, Platten oder Pfeilern.

16. Verwendung einer Reaktionsharzformulierung nach einem der Ansprüche 1 bis 8 oder 10 zur Herstellung eines chemischen Befestigungssystems für Befestigungszwecke im Baubereich, wobei die Reaktionsharzformulierung mit einem Härter und gegebenenfalls weiteren Zusätzen gemischt wird.

## Claims

1. Rapidly functional chemical fixing system for anchoring elements, which comprises a radically curing, which includes also "curable", olefinic reactive resin formulation, a hardener and no or further additives, wherein the reactive resin formulation is composed of one or more curing olefinic reactive resins, one or more aminic accelerators, one or more non-phenolic (anaerobic) inhibitors and no or one or more phenolic inhibitors, and as hardener there is provided a hardener having at least one peroxide as initiator, **characterised in that** the reactive resin formulation comprises as the aminic accelerator(s) at least one highly active aminic accelerator in an amount of at least 1.5% by weight, based on the mass of the reactive resin formulation, the mass ratio of accelerator to phenolic inhibitor therein is > 5, which implies that in the absence of phenolic inhibitor this ratio is "infinite", and the reactive resin formulation comprises as non-phenolic inhibitor(s) up to 5% by weight, based on the mass of the reactive resin formulation, of at least one non-phenolic inhibitor, which has hardly any effect on the curing time, and in the hardener at least 1% of peroxide, based on the mass of the reactive resin formulation, is provided.

2. Chemical fixing system according to claim 1, **characterised in that** at least one phenolic inhibitor is provided in the reactive resin formulation and the mass ratio of accelerator to phenolic inhibitor is 5.

3. Chemical fixing system according to claim 1 or 2, **characterised in that** the reactive resin formulation comprises at least one curing component for radically curing reactive resins, selected from the group comprising vinyl ester resins; acrylate monomers, acrylamide monomers, mono-, di- or triacrylates or mono-, di- or trimethacrylates, epoxy acrylates, urethane acrylates or urea acrylates, unsaturated polyesters with unsaturated carboxylic acid components, and styrenes, or mixtures of two or more such compounds.

4. Chemical fixing system according to any one of claims 1 to 3, **characterised in that** the reactive resin formulation includes 2% or more by weight, based on the mass of the reactive resin formulation, of the aminic accelerator, preferably 2 to 5% by weight, has at least one phenolic inhibitor, the weight ratio of aminic accelerator to phenolic inhibitor is 10 or more, preferably 15 to 70, in particular 20 to 70, and in the hardener at least 1.5% by weight, based on the mass of the reactive resin formulation, preferably at least 2% by weight, in particular 2 to 10% by weight of peroxide are provided.

5. Chemical fixing system according to any one of claims 1 to 4, **characterised in that,** based on the mass of the reactive resin formulation, radically curing olefinic reactive resin or the monomers or monomer mixtures representing it are provided in a proportion by weight of 5 to 98.5%, in particular from 10 to 98.5% by weight.

6. Chemical fixing system according to any one of claims 1 to 5, in which as the aminic accelerator in the reactive resin formulation there is provided an aromatic amine selected from the group consisting of N,N-bis(hydroxy C₁-C₇-alkyl) anilines, toluidines or xylidines, in particular N,N-bis(hydroxymethyl or hydroxyethyl) toluidine or xylidine, preferably N,N-bis(hydroxymethyl or hydroxyethyl)-p-toluidine, N,N-bis(hydroxyethyl) xylidine, and of industrial products, which substantially contain in each case N-unsubstituted, N-mono-, N,N-bis-, N,N,N-tris and/or N,N,N,N-tetrakis(hydroxy-C₁-C₇-alkyl, especially hydroxyethyl)-substituted anilines, p-toluidines or xylidines, such as industrial ethoxylated p-toluidine, or mixtures of two or more of these aminic inhibitors.

7. Chemical fixing system according to any one of claims 1 to 6, in which as the phenolic inhibitor in the reactive resin formulation there are provided hydroquinone derivatives, hydroquinone, mono-, di- or trimethyl hydroquinone, phenols, in particular 4,4'-bis(2,5-di-tert-butylphenol), 1,3,5-trimethyl-2,4,6-tris(3,5-di-tert-butyl-4-hydroxy.. benzyl) benzene, butyl pyrocatechols, primarily 3,5-di-tert-butyl-1,2-benzenediol, or 4-methoxyphenol, or a mixture of two or more thereof, wherein, based on the mass of the reactive resin formulation, the amount is adjusted so that the proportion therein is not more than 1% by weight, in particular between 0.0001 and 1% by weight, provided that the weight ratio of aminic accelerator to phenolic inhibitor is > 5, preferably 10 or more, in particular 15 or more, for example, up to 70 in each case.

8. Chemical fixing system according to any one of claims 1 to 7, **characterised in that** as non-phenolic inhibitor in the reactive resin formulation there is provided a phenothiazine, in particular phenothiazine itself, or an organic nitroxyl radical, in particular 1-oxyl-2,2,6,6-tetramethylpiperidine-4-ol or a mixture thereof in a proportion by weight, based on the mass of the reactive resin formulation, in the range from 1 ppm to 2%, preferably from 10 ppm to 1%.

9. Chemical fixing system according to any one of claims 1 to 8, **characterised in that** as hardener there is provided a hardener having as the initiator at least one peroxide selected from organic peroxides, in particular diacyl peroxides, preferably diacetyl peroxide, dibenzoyl or bis(4-chlorobenzoyl)peroxide, ketone peroxides, preferably methyl ethyl ketone peroxide or cyclohexanone peroxide, or alkyl peresters, preferably tert-butyl perbenzoate, and also inorganic peroxides, such as persulphates or perborates, wherein at least 2% of peroxide, preferably 2 to 15%, in particular 2 to 10%, in each case based on the mass of the reactive resin formulation, are provided in the hardener.

10. Chemical fixing system according to any one of claims 1 to 9, **characterised in that** in addition to the reactive resin formulation and/or the hardener, it contains one or more additives, in particular fillers and/or further additives, such as plasticisers, nonreactive diluents, flexibilisers, stabilisers, curing catalysts, rheology aids, thixotropic agents, wetting agents, or colouring additives, such as dyes or especially pigments.

11. Chemical fixing system according to any one of claims 1 to 10, in the form of a multi-component, in particular two-component system.

12. Chemical fixing system according to claim 11 in the form of a multi-component kit, **characterised in that** the multi-component kit comprises a cartridge, which contains the reactive resin formulation, optionally with one or more fillers, and the hardener in spatially separated form.

13. Use of a chemical fixing system according to any one of claims 1 to 12, for fixing one or more anchoring elements, wherein a reactive resin formulation and a hardener, as mentioned in the said claims, are mixed with one another and subsequently or simultaneously introduced into at least one hole and simultaneously or subsequently at least one anchoring element is inserted into the at least one hole.

14. Use according to claim 13, **characterised in that** the anchoring element is subjected to load after 5 or fewer minutes, in particular after 1 to 3 minutes.

15. Use according to claims 13 or 14, wherein the hole is situated in a substrate that is or will be part of a construction, primarily masonry, ceilings, walls, floors, panels or pillars.

16. Use of a reactive resin formulation according to any one of claims 1 to 8 or 10 for preparation of a chemical fixing system for fixing purposes in the construction industry, wherein the reactive resin formulation is mixed with a hardener and optionally further additives.

## Revendications

1. Système de scellement ou de fixation chimique à durcissement rapide pour éléments d'ancrage, qui comprend une formulation oléfinique de résine composite à durcissement radicalaire, ce qui englobe aussi le terme « durcissable », un durcisseur et aucun ou d'autres additifs, dans lequel la formulation de résine composite est composée d'une ou de plusieurs résines composites oléfiniques durcissantes, d'un ou de plusieurs accélérateurs aminiques, d'un ou de plusieurs inhibiteurs (anaérobies) non phénoliques, et d'aucun ou d'un ou de plusieurs inhibiteurs phénoliques, et dans lequel est prévu en tant que durcisseur un durcisseur comportant au moins un peroxyde en tant qu'initiateur, **caractérisé en ce que** la formulation de résine composite présente en tant qu'accélérateur(s) aminique(s) au moins un accélérateur aminique hautement actif dans une quantité au moins égale à 1,5 % en masse, sur la base de la masse de la formulation de résine composite, **en ce que** le rapport de masse entre accélérateur et inhibiteur phénolique qu'il comprend est à cet effet > 5, ce qui comprend le fait qu'en l'absence d'inhibiteur phénolique, ce rapport est « infini », et **en ce que** la formulation de résine composite présente en tant qu'inhibiteur(s) non phénolique(s) jusqu'à 5 % en masse, sur la base de la masse de la formulation de la résine composite, d'au moins un inhibiteur non phénolique qui influence à peine le temps de durcissement, et dans lequel dans le durcisseur est prévu au moins 1 % de peroxyde, sur la base de la masse de la formulation de résine composite.

2. Système de scellement chimique selon la revendication 1, **caractérisé en ce que** dans la formulation de résine composite est prévu au moins un inhibiteur phénolique et **en ce que** le rapport de masse entre accélérateur et inhibiteur phénolique qu'il contient est > 5.

3. Système de scellement chimique selon l'une des revendications 1 ou 2, **caractérisé en ce que** la formulation de résine composite comporte au moins un composant durcissant pour la résine composite à durcissement radicalaire, sélectionné dans le groupe composé de résines d'esters de vinyle ; de monomères d'acrylate ; de monomères d'acrylamide ; de mono-, di- ou tri-acrylates ou -méthacrylate, d'epoxyacrylates, d'acrylates d'uréthane ou d'urée, de polyesters insaturés ayant des composants acide carboxylique insaturés et des styrènes, ou de mélanges de deux de ces composés ou plus.

4. Système de scellement chimique selon l'une des revendications 1 à 3, **caractérisé en ce que** la formulation de résine composite contient 2 % en masse, sur la base de la masse de la formulation de résine composite, ou plus, de l'accélérateur aminique, de préférence 2 à 5 % en masse, présente au moins un inhibiteur phénolique, le rapport de masse entre accélérateur aminique et inhibiteur phénolique étant de 10 ou plus, étant de préférence compris entre 15 et 70, en particulier entre 20 et 70, et **en ce que** dans le durcisseur sont prévus au moins 1,5 % en masse, sur la base de la masse de la formulation de résine composite, de préférence au moins 2 % en masse, en particulier 2 à 10 % en masse, de peroxyde.

5. Système de scellement chimique selon l'une des revendications 1 à 4, **caractérisé en ce que,** sur la base de la masse de la formulation de résine composite, sont prévus une résine composite oléfinique à durcissement radicalaire ou les monomères ou mélanges de monomères la représentant, selon une fraction en masse comprise entre 5 et 98,5 %, en particulier entre 10 et 98,5 % en masse.

6. Système de scellement chimique selon l'une des revendications 1 à 5, dans lequel est prévue dans la formulation de résine composite en tant qu'accélérateur aminique une amine aromatique sélectionnée dans le groupe composé de N,N-bis(hydroxy-alkyle en C₁-C₇)-anilines, -toluidines ou -xylidines, en particulier la N,N-bis(hydroxyméthyl- ou hydroxyéthyl)-toluidine ou -xylidine, de préférence la N,N-bis(hydroxyméthyl- ou hydroxyéthyl)-p-toluidine, la N,N-bis(hydroxyéthyl)-xylidine, et des produits techniques qui se composent essentiellement d'anilines, de p-toluidines ou de xylidines non substituées en N ou substituées par un N-mono-, N,N-bis-, N,N,N-tris- et/ou N,N,N,N-tétrakis(hydroxyalkyle en C₁-C₇, en particulier hydroxyéthyle), comme la p-toluidine technique éthoxylée, ou de mélanges de deux de ces inhibiteurs aminiques ou plus.

7. Système de scellement chimique selon l'une des revendications 1 à 6, dans lequel sont prévus dans la formulation de résine composite en tant qu'inhibiteur phénolique des dérivés d'hydroquinone, de l'hydroquinone, de la mono-, di- ou tri-méthylhydroquinone, des phénols, en particulier le 4,4'-bis(2,6-di-tert-butylphénol), le 1,3,5-triméthyl-2,4,6-tris(3,5-di-tert-butyl-4-hydroxybenxyl)-benzene, la butylpyrocatéchine, essentiellement le 3,5-di-tert-butyl-1,2-benzènediol, ou le 4-méthoxyphénol, ou un mélange de deux de ceux-ci ou plus, où, sur la base de la masse de la formulation de résine composite, la quantité est sélectionnée de façon telle que la fraction contenue ne représente pas plus de 1 %, en particulier entre 0,0001 et 1 % en masse, à la condition que le rapport de masse entre accélérateur aminique et inhibiteur phénolique soit > 5, de préférence égal à 10 ou plus, en particulier égal à 15 ou plus, par exemple respectivement égal à 70.

8. Système de scellement chimique selon l'une des revendications 1 à 7, **caractérisé en ce que** dans la formulation de résine composite est prévu en tant qu'inhibiteur non phénolique une phénothiazine, en particulier la phénothiazine elle-même, ou un radical nitroxyle organique, en particulier le 1-oxyl-2,2,6,6-tétraméthylpipéridin-4-ol, ou un mélange de ceux-ci dans une fraction en masse, sur la base de la masse de la formulation de résine composite, comprise dans la gamme de 1 ppm à 2 %, de préférence de 10 ppm à 1 %.

9. Système de scellement chimique selon l'une des revendications 1 à 8, **caractérisé en ce qu'**est prévu en tant que durcisseur un durcisseur comportant au moins un peroxyde, sélectionné parmi des peroxydes organiques, en particulier des diacylperoxydes, de préférence le peroxyde de diacétyle, le dibenzoyl- ou le bis(4-chlorobenzoyl)-pcroxyde, des cétone-peroxydes, de préférence le peroxyde de méthyléthylcétone ou le peroxyde de cyclohexanone, ou des alkylperesters, de préférence le tert-butylperbenzoate, et de plus des peroxydes inorganiques, comme des persulfates ou des perborates, en tant qu'initiateur, où dans le durcisseur sont prévus au moins 2 % de peroxyde, de préférence 2 à 15 %, en particulier 2 à 10 %, respectivement sur la base de la masse de la formulation de résine composite.

10. Système de scellement chimique selon l'une des revendications 1 à 9, **caractérisé en ce qu'**il contient en plus de la formulation de résine composite et/ou du durcisseur un ou plusieurs additifs, en particulier des matières de charge et/ou d'autres additifs, comme des plastifiants, des diluants non réactifs, des flexibilisateurs, des stabilisants, des catalyseurs de durcissement, des auxiliaires de rhéologie, des agents thixotropes, des agents mouillants ou des additifs colorants comme des colorants ou en particulier des pigments.

11. Système de scellement chimique selon l'une des revendications 1 à 11 sous la forme d'un kit ou ensemble à plusieurs composants, en particulier d'un kit ou ensemble à deux composants.

12. Système de scellement chimique selon la revendication 11 sous la forme d'un kit à plusieurs composants, **caractérisé en ce qu'**il s'agit concernant le kit à plusieurs composants d'une cartouche qui contient la formulation de résine composite, éventuellement avec une ou plusieurs matières de charge, et le durcisseur sous une forme qui en est séparée spatialement.

13. Utilisation d'un système de scellement ou de fixation chimique selon l'une des revendications 1 à 12 pour sceller ou fixer un ou plusieurs éléments d'ancrage, dans lequel une formulation de résine composite et un durcisseur, tels que cités dans les revendications citées, sont mélangés ensemble puis introduits à la suite ou simultanément dans au moins un trou et où dans le même temps ou à la suite, au moins un élément d'ancrage est introduit dans le trou, au moins au nombre de un.

14. Utilisation selon la revendication 13, **caractérisée en ce que** la charge ou sollicitation de l'élément d'ancrage se fait après 5 minutes ou moins, en particulier après 1 à 3 minutes.

15. Utilisation selon l'une des revendications 13 ou 14, dans lequel le trou se trouve dans un substrat qui est ou sera un élément d'un ouvrage, essentiellement d'un ouvrage de maçonnerie, de toits, de parois, de sols, de dalles ou de piliers.

16. Utilisation d'une formulation de résine composite selon l'une des revendications 1 à 8 ou 10 pour fabriquer un système de scellement chimique à des finns de scellement ou de fixation dans le domaine de la construction, dans laquelle la formulation de résine composite est mélangée avec un durcisseur et éventuellement d'autres additifs.
